# EUROPEAN PATENT APPLICATION

(11) **EP 4 707 744 A1**
(43) Date of publication of application: **11.03.2026**
(21) Application number: 25195262.8
(22) Date of filing: 12.08.2025
(51) Int. Cl.: G01C 21/36

(54) **A WAYPOINT DETERMINATION DEVICE**

(30) Priority: 29.08.2024 GB 202412650
(71) Applicant: AUMOVIO Germany GmbH, 60488 Frankfurt am Main (DE)
(72) Inventor: M S, Sushma, 560099 Bangalore (IN)
(74) Representative: Aumovio Corporation

(57) **Abstract**

There is provided a waypoint determination device (100) for use with a vehicle and a computer implemented method of determining waypoint information, the device comprises a processing unit to obtain a current location information of the waypoint determination device, a current speed of transit of the waypoint determination device and a current heading angle of transit of the waypoint determination device and the processing unit is further arranged to generate a geometrical shape based on the current location information, the current speed of transit and the current heading angle of transit of the waypoint determination device; wherein the processing unit is arranged to obtain a plurality of shape location information based on an outline of the generated geometrical shape; wherein the processing unit is further arranged to query a database containing map information, the query including usage of the plurality of shape location information;
wherein the processing unit is further arranged to determine one or more waypoints from the query and based on the plurality of shape location information; and
wherein the processing unit is further arranged to display the determined one or more waypoints to an operator at a display unit coupled to the processing unit.

## Description

### TECHNICAL FIELD

The present disclosure relates broadly to a waypoint determination device and a computer implemented method of determining waypoint information.

### BACKGROUND

In existing navigation systems such as Google Maps, the inventors recognise that there is a lack of a capability to more dynamically predict possible waypoints when an operator/driver/user has already embarked on a journey ahead of time. As an example, with existing navigation systems, when a user searches or queries for a particular Point Of Interest (POI), such navigation systems may merely return a list of relevant POIs around or in the vicinity of a current (single) geographical coordinate of the user.

The inventors further recognise that for a vehicle in transit, if a route has not been indicated in an existing navigation system, there is a problem that such an existing navigation system is not able to determine possible waypoints without an indicated route in the navigation system. That is, at best, an existing navigation system needs pre-determined co-ordinates along an indicated route to determine possible waypoints. The inventors recognise that an existing navigation system typically does not have a mechanism to determine possible waypoints ahead of a vehicle in transit when no destination is provided. The inventors recognise that an existing navigation system may only highlight a current position of a vehicle in transit.

In view of the above, there exists a need for a waypoint determination device for use with a vehicle that seeks to address at least one of the above problems.

### SUMMARY

In accordance with an aspect of the present disclosure, there is provided a waypoint determination device for use with a vehicle, the device comprising a processing unit arranged to obtain a current location information of the waypoint determination device, the processing unit further arranged to obtain a current speed of transit of the waypoint determination device; the processing unit being further arranged to obtain a current heading angle of transit of the waypoint determination device and the processing unit is further arranged to generate a geometrical shape based on the current location information, the current speed of transit and the current heading angle of transit of the waypoint determination device; wherein the processing unit is arranged to obtain a plurality of shape location information based on an outline of the generated geometrical shape; wherein the processing unit is further arranged to query a database containing map information, the query including usage of the plurality of shape location information; wherein the processing unit is further arranged to determine one or more waypoints from the query and based on the plurality of shape location information; and wherein the processing unit is further arranged to display the determined one or more waypoints to an operator at a display unit coupled to the processing unit.

The geometrical shape may substantially be an ellipse.

The processing unit may be further arranged to vary the geometrical shape in size based on a variance in the current speed of transit of the waypoint determination device.

The processing unit may be further arranged to generate the geometrical shape with the outline of the generated geometrical shape spaced apart from the current location information of the waypoint determination device.

The processing unit may be further arranged to determine the one or more waypoints that is each situated along the outline of the generated geometrical shape, within a space between the outline of the generated geometrical shape and the current location information of the waypoint determination device or both.

The processing unit may be further arranged to generate one or more second geometrical shapes based on the determined one or more waypoints and to determine one or more additional waypoints based on a plurality of second shape location information that is based on one or more outlines of the generated one or more second geometrical shapes.

The database containing map information may be provided accessible on the internet.

In accordance with another aspect of the present disclosure, there is provided a computer implemented method of determining waypoint information, the computer implemented method comprising obtaining a current location information using a processing unit; obtaining a current speed of transit using the processing unit; obtaining a current heading angle of transit using the processing unit; generating, using the processing unit, a geometrical shape based on the current location information, the current speed of transit and the current heading angle of transit; obtaining, using the processing unit, a plurality of shape location information based on an outline of the generated geometrical shape; querying a database containing map information using the processing unit, the querying including using the plurality of shape location information; determining, using the processing unit, one or more waypoints from the querying step and based on the plurality of shape location information; and displaying the determined one or more waypoints using the processing unit to an operator.

The geometrical shape may substantially be an ellipse.

The computer-implemented method may further comprise varying the geometrical shape in size based on a variance in the current speed of transit.

The step of generating a geometrical shape may further comprise generating the geometrical shape with the outline of the generated geometrical shape spaced apart from the current location information.

The step of determining one or more waypoints may further comprise determining the one or more waypoints that is each situated along the outline of the generated geometrical shape, within a space between the outline of the generated geometrical shape and the current location information or both.

The computer-implemented method may further comprise generating one or more second geometrical shapes based on the determined one or more waypoints; and determining one or more additional waypoints based on a plurality of second shape location information that is based on one or more outlines of the generated one or more second geometrical shapes.

The step of querying a database containing map information may comprise accessing the internet to access the database.

### BRIEF DESCRIPTION OF THE DRAWINGS

Exemplary embodiments of the present disclosure will be better understood and readily apparent to one of ordinary skill in the art from the following written description, by way of example only, and in conjunction with the drawings, in which:
FIG. 1 is a schematic block diagram illustrating a waypoint determination device for use with a vehicle in an exemplary embodiment.
FIG. 2 is a schematic drawing illustrating a process output of a waypoint determination device in an exemplary embodiment.
FIG. 3 is a schematic illustration of an implementation output of a waypoint determination device in an exemplary embodiment.
FIG. 4 is a schematic illustration of an implementation output of a waypoint determination device in another exemplary embodiment.
FIG. 5 is a schematic drawing of a second process output in another exemplary embodiment.
FIG. 6 is a schematic illustration of an implementation output of a waypoint determination device in another exemplary embodiment.
FIG. 7 is a schematic flowchart illustrating a computer-implemented method of determining waypoint information in an exemplary embodiment.

### DETAILED DESCRIPTION

Exemplary embodiments described herein may provide a device for predictive navigation using a generated geometrical shape e.g. with respect to a motor vehicle. Thus, a waypoint determination device for use with a vehicle is provided. A computer implemented method of determining waypoint information may also be provided.

In the description herein, a waypoint refers to a reference point that assists a user or operator to know the user/operator's current location and potential navigation path towards the reference point. Waypoints may include a landmark, an object and/or co-ordinates that may in turn include degrees of longitude and latitude.

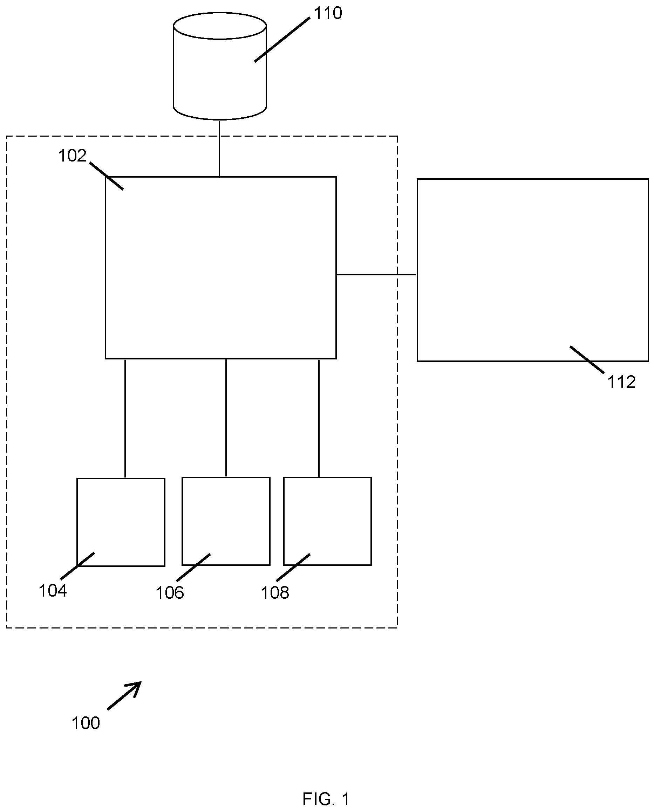

FIG. 1 is a schematic block diagram illustrating a waypoint determination device 100 for use with a vehicle in an exemplary embodiment. In the exemplary embodiment, the device 100 may be provided or disposed onboard a vehicle (e.g. a motor vehicle). In the exemplary embodiment, the waypoint determination device 100 is provided integrated with the vehicle. In other exemplary embodiments, the waypoint determination device 100 may be provided removable from the vehicle. In one example, the device 100 may be a vehicle electronic control unit (ECU) or may be separate from the vehicle ECU. The device 100 may be a HPC (High Performance Computing) unit.

In the exemplary embodiment, the device 100 comprises a processing unit 102. In one example, the processing unit 102 may be a module/unit or a portion of a vehicle electronic control unit (ECU). In other examples, the processing unit 102 may be separately provided from the vehicle ECU. The processing unit 102 is arranged to obtain a current location information 104 of the waypoint determination device 100 and further arranged to obtain a current speed of transit 106 of the waypoint determination device 100. In the exemplary embodiment, the location information may comprise, for example, information on a geographical co-ordinate of the device 100 e.g. in terms of longitude and latitude.

In the exemplary embodiment, the processing unit 102 is further arranged to obtain a current heading angle of transit 108 of the waypoint determination device 100. The processing unit 102 is further arranged to generate a geometrical shape based on the current location information 104, the current speed of transit 106 and the current heading angle of transit 108 of the waypoint determination device 100.

In exemplary embodiments, if the waypoint determination device 100 is provided or disposed onboard a vehicle, a location information, a speed of transit and/or a heading angle of transit of the waypoint determination device 100 is also substantially identical to a location information, a speed of transit and/or a heading angle of transit of the vehicle.

In the exemplary embodiment, the processing unit 102 is arranged to obtain a plurality of shape location information based on an outline of the generated geometrical shape. The plurality of shape location information may comprise one or more geographical co-ordinates in terms of latitude and longitude based on the outline of the generated geometrical shape. For example, the shape location information may include geographical co-ordinates determined substantially along/on the outline of the generated geometrical shape. For example, the shape location information may include geographical co-ordinates determined substantially within a space between the outline of the generated geometrical shape and the current location information of the waypoint determination device 100.

In the exemplary embodiment, the processing unit 102 is coupled to a database 110 containing map information. The processing unit 102 is further arranged to query the database containing map information 110, the query including usage of the plurality of shape location information. In the exemplary embodiment, the database 110 may be an offline database or an online database, e.g. a database accessible on the internet. The database may provide/store location information based on a geographical map, and the query may include inputting the obtained shape location information e.g. in terms of geographical co-ordinates based on the outline of the generated geometrical shape.

In the exemplary embodiment, the processing unit 102 is further arranged to determine one or more waypoints from the query and based on the plurality of shape location information. For example, the query results may be returned to the processing unit 102 in the form of one or more known waypoints associated with a geographical map, e.g. based on stored location information of the database. In the exemplary embodiment, the determination may comprise matching or identifying one or more points of interest (POIs) or waypoints based on the outline of the generated geometrical shape, including POIs and waypoints substantially along/on the outline of the generated geometrical shape and/or POIs and waypoints between the outline of the generated geometrical shape and the device 100, based on the shape location information, e.g. as geographical co-ordinates, inputted via the query.

In the exemplary embodiment, the processing unit 102 may be coupled to a display unit 112. The processing unit 102 is further arranged to display the determined one or more waypoints to an operator at the display unit 112 coupled to the processing unit 102. The display unit 112 may be in the form of a graphical user interface that allows the operator to, for example, view and/or select the determined one or more waypoints, e.g. for more information and/or for navigation purposes.

In the exemplary embodiment, the waypoint determination device 100 comprises the processing unit 102 which can obtain the current location information 104, the current speed of transit 106 and the current heading angle of transit 108. For example, one or more subsidiary units/modules may be provided coupled to the processing unit 102, each subsidiary unit/module being arranged to obtain the current location information 104, the current speed of transit 106 and the current heading angle of transit 108.

In the exemplary embodiment, the processing unit 102 may additionally be coupled to an audio input module (not shown). The audio input module may be configured to receive an audio signal e.g. a human voice, and on receiving the audio signal, the audio input module may trigger/activate the processing unit 102 to perform one or more steps of a computer implemented method of determining waypoint information.

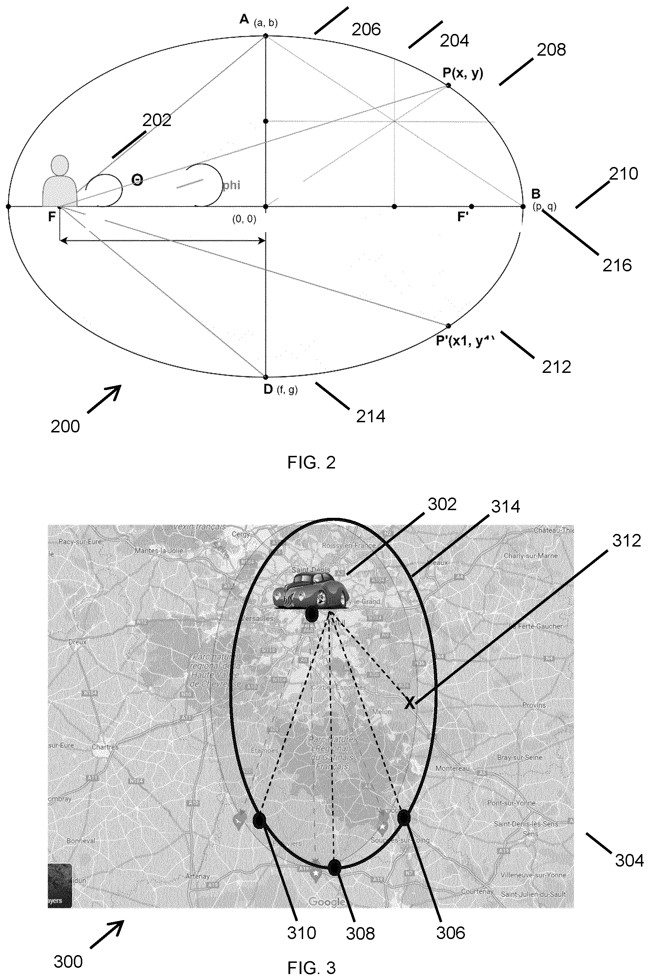

FIG. 2 is a schematic drawing illustrating a process output of a waypoint determination device in an exemplary embodiment. In the exemplary embodiment, the process output 200 may be generated by a processing unit of a waypoint determination device that is substantially identical to the waypoint determination device 100 described with reference to FIG. 1. For ease of reference, like numerals are used for exemplary implementations of similar components of the waypoint determination device 100 as described in FIG. 1. Further, in the exemplary embodiment, the waypoint determination device 100 may be disposed onboard a vehicle (e.g. a motor vehicle) and the current location information of the waypoint determination device 100 may be denoted graphically on the process output 200 as a human operator location 202.

In the exemplary embodiment, the process output 200 is a generated geometrical shape based on a current location information, a current speed of transit and a current heading angle of transit of the waypoint determination device 100.

In the exemplary embodiment, for obtaining the process output 200 or geometrical shape, the processing unit 102 may obtain a current location information 104 comprising the geographical co-ordinate of the operator location 202, i.e. the geographical co-ordinate of the waypoint determination device 100 or the vehicle that the waypoint determination device 100 is disposed onboard on. The processing unit 102 further obtains a current speed of transit 106 and a current heading angle of transit 108 of the waypoint determination device 100.

In the exemplary embodiment, based on the current location information 104, the current speed of transit 106 and the current heading angle of transit 108 of the waypoint determination device 100, the processing unit 102 may generate a geometrical shape 204. In the exemplary embodiment, the geometrical shape 204 is substantially an ellipse 204. In the exemplary embodiment, the ellipse 204 is one example of a generated geometrical shape generated by the processing unit 102. The human operator location 202 is positioned at one of the foci of the ellipse 204.

Based on the current heading angle of transit 108, the ellipse 204 is generated in advance of the human operator location 202 towards the current heading angle of transit. In the exemplary embodiment, the ellipse 204 is generated from the human operator location 202 towards a set of heading co-ordinates 210. As such, based on the above, the processing unit 102 may generate the geometrical shape or ellipse 204 with the outline of the generated geometrical shape spaced apart from the current location information or the human operator location 202 of the waypoint determination device 100.

Based on the current speed of transit 106, the ellipse 204 is generated with its major axis 216 corresponding in length to the current speed of transit 106 of the waypoint determination device 100. As an example only, it may be arranged for the ellipse 204 to be generated with its major axis 216 with a predetermined starting length of about 1 km at a base speed of transit of about 50 km/h and for the major axis 216 to increase in length of about 1 km for every increase of about 15 km/h of the speed of transit. As such, based on the above, the processing unit 102 may vary the geometrical shape or ellipse 204 in size based on a variance in the current speed of transit 106 of the waypoint determination device 100.

In the exemplary embodiment, using the ellipse 204, the processing unit 102 may obtain a plurality of shape location information e.g. comprising one or more geographical co-ordinates based on an outline of the ellipse 204, e.g. including geographical co-ordinates substantially on/along the outline of the ellipse 204, e.g. co-ordinates 206, co-ordinates 208, the co-ordinates 210, co-ordinates 212 and co-ordinates 214. The co-ordinates e.g. 206 to 214 may be in any suitable form such as in the form of (x,y) and/or longitude, latitude etc. It will be appreciated that the co-ordinates e.g. 206 to 214 are shown for illustration purposes and the processing unit 102 may obtain a larger number or smaller number of co-ordinates based on the outline of the ellipse 204.

In the exemplary embodiment, the waypoint determination device 100 may thus obtain the process output 200 comprising the plurality of shape location information.

In the exemplary embodiment, it is recognized that the use of an ellipse as a geometrical shape may be more useful than other geometrical shape as an ellipse is usefully akin to providing an arrow head along its major axis as a representation of a device/vehicle's possible heading angle of transit. An ellipse may also allow a "look ahead" in different directions and/or at different lengths, i.e. with respect to its major axis, to determine possible future waypoints. This may be more useful as compared to e.g. a circle which has a fixed circumference around a centre point. In exemplary embodiments, it is possible for the geometrical shape to vary depending on a speed of transit of the waypoint determination device 100. For example, if the waypoint determination device 100 is stationary, the geometrical shape may be generated as a circle.

In exemplary embodiments herein, a current location information may be obtained by a number of different ways. For example, a current location information may be obtained by interacting with a Global Positioning System (GSP) device and the like. In exemplary embodiments herein, a current speed of transit or a travelling speed or a speed of motion may be obtained by a number of different ways. For example, a current speed of transit may be obtained by information obtained from a vehicle ECU and/or from a speedometer of a vehicle and/or based on calculations from a GPS device and the like. In exemplary embodiments herein, a current heading angle of transit, or a direction where a waypoint determination device is being headed or travelling towards, may be obtained by a number of different ways. For example, a current heading angle of transit may be obtained by information obtained from a vehicle ECU and/or from steering information of a vehicle and/or based on extrapolations or predictions computed from a GPS device and the like.

FIG. 3 is a schematic illustration of an implementation output of a waypoint determination device in an exemplary embodiment. In the exemplary embodiment, the implementation output 300 may be generated by a processing unit of a waypoint determination device that is substantially identical to the waypoint determination device 100 described with reference to FIG. 1 and using the process output 200 described with reference to FIG. 2. For ease of reference, like numerals are used for exemplary implementations of similar components of the waypoint determination device 100 as described in FIG. 1 and of similar elements of the process output 200 as described in FIG. 2. Further, in the exemplary embodiment, the waypoint determination device 100 may be disposed onboard a vehicle (e.g. a motor vehicle) and the current location information of the waypoint determination device 100 may be denoted graphically on the implementation output 300 as a vehicle 302.

In the exemplary embodiment, an ellipse 314 is generated using the process output 200 described with reference to FIG. 2. The ellipse 314 may be substantially identical to the generated ellipse 204 described with reference to FIG. 2. Further, using the plurality of shape location information of the process output 200 comprising co-ordinates 206, co-ordinates 208, co-ordinates 210, co-ordinates 212 and co-ordinates 214 (described with reference to FIG. 2), the processing unit 102 may query a database (e.g. an offline database or an online database) containing map information 110. The query may include inputting the obtained geographical co-ordinates of the plurality of shape location information (i.e. co-ordinates 206, co-ordinates 208, co-ordinates 210, co-ordinates 212 and co-ordinates 214) and the map information 110 may comprise a geographical map 304 shown in FIG. 3. Based on the inputted geographical co-ordinates, the query results may be returned to the processing unit 102 in the form of one or more known waypoints or POIs e.g. 306, 308, 310, 312, these waypoints e.g. 306, 308, 310, 312 associated with the geographical map 304 and also each based on stored location information of the database containing map information 110. The processing unit 102 may determine one or more waypoints or POIs 306, 308, 310, 312 based on an outline of the generated ellipse 314. The processing unit 102 may display the one or more waypoints 306, 308, 310, 312 to an operator of the vehicle at a display unit 112 e.g. by displaying the implementation output 300 on the display unit 112.

In the exemplary embodiment, therefore, in use, the waypoint determination device 100 may be used to determine one or more possible waypoints based on the circumference of a generated geometrical shape (e.g. an ellipse) that is generated based on obtained location information of the vehicle. In use, the determined one or more waypoints may be used to usefully search for data (e.g. POIs) requested by an operator of a vehicle.

In the exemplary embodiment, the processing unit 102 may be further arranged to vary the geometrical shape in size based on a variance in the current speed of transit of the waypoint determination device. In the exemplary embodiment, as one example, the processing unit 102 may vary the length of the major axis 216 of the ellipse 204 based on the obtained current speed of transit 106 of the vehicle which has the waypoint determination device 100 disposed onboard on. For example, the size of the ellipse 204 may become larger (varying in size dynamically) if the vehicle is moving at a higher speed of transit or accelerating and may conversely become smaller (varying in size dynamically) when the vehicle is cruising at a lower speed of transit or decelerating. The size of the ellipse 314 shown in the implementation output 300 may be varied dynamically accordingly.

In the exemplary embodiment, the processing unit 102 may be further arranged to generate the geometrical shape with the outline of the generated geometrical shape spaced apart from the current location information of the waypoint determination device. As one example, in the implementation output 300 of FIG. 3, the vehicle 302 may be spaced substantially apart from the outline of the ellipse 314, i.e. the vehicle 302 is not located substantially on/along the outline/circumference of the ellipse 314.

In the exemplary embodiment, the processing unit 102 may be further arranged to determine the one or more waypoints that is each situated along the outline of the generated geometrical shape, within a space between the outline of the generated geometrical shape and the current location information of the waypoint determination device or both. As one example, as shown in the implementation output 300, based on the outline of the ellipse 314, the processing unit 102 may determine waypoints 306, 308, 310 that is each situated along/on the outline of the ellipse 314. Further, based on the outline of the ellipse 314, the processing unit 102 may determine the waypoint 312 that is within the space between the outline of the ellipse 314 and the current location information of the waypoint determination device 100 i.e. see vehicle 302. In other exemplary embodiments, the one or more waypoints determined by the processing unit 102 may all be situated along the outline of the generated geometrical shape. In yet other exemplary embodiments, the one or more waypoints determined by the processing unit 102 may all be within a space between the outline of the generated geometrical shape and the current location information of the waypoint determination device.

In the exemplary embodiment, the database containing map information 110 may be provided accessible on the internet. The waypoint determination device 100 may be coupled to the database containing map information 110 via, for example but not limited to, a transceiver device, a mobile computing device or the vehicle ECU etc. The database containing map information may be provided by third party vendors such as, for example only, vendors relating to provision of information for POIs and/or weather forecasts that may be relevant to identified possible waypoints.

In the exemplary embodiment, the processing unit 102 may be triggered to generate an output e.g. similar to the implementation output 300 based on an audio signal e.g. a human voice. For example, the audio input module of the waypoint determination device may receive an audio signal e.g. a human voice indicating or providing a prompt, e.g. using a voice assistant, to search for restaurants on a journey and trigger the processing unit 102 to generate an output based on the audio signal. The generated output may display one or more waypoints that meet the requirements indicated in the received human voice, or the requested type of POIs, e.g. the one or more waypoints displayed in the generated output are restaurants.

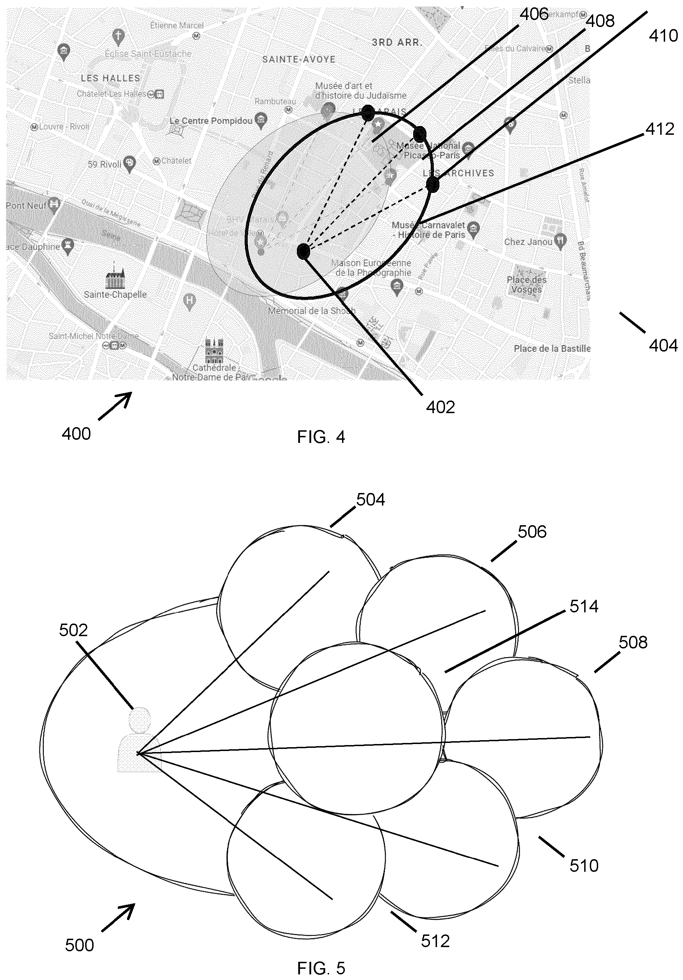

FIG. 4 is a schematic illustration of an implementation output of a waypoint determination device in another exemplary embodiment. In the exemplary embodiment, the implementation output 400 may comprise elements substantially similar to the elements displayed on the implementation output 300 described with reference to FIG. 3 and may also be generated substantially similarly to the implementation output 300. The implementation output 400 may comprise the current location information of a waypoint determination device denoted graphically on the implementation output 400 as a moving object 402 (compare vehicle 302), a geographical map 404 (compare geographical map 304), one or more determined waypoints 406, 408, 410 (compare one or more waypoints 306, 308, 310, 312) and a generated ellipse 412 (compare ellipse 314). In the exemplary embodiment, the geographical map 404 may be of a different geographical location compared to the geographical map 304 described with reference to FIG. 3.

In the exemplary embodiment, the moving object 402 may be e.g. a human operator mounted thereon with the waypoint determination device or e.g. another form of a transport apparatus other than a car or motor-vehicle.

FIG. 5 is a schematic drawing of a second process output in another exemplary embodiment. In the exemplary embodiment, the second process output 500 may be generated by a processing unit of a waypoint determination device that is substantially identical to the waypoint determination device 100 described with reference to FIG. 1, using the information of the implementation output 300 described with reference to FIG. 3. Further, in the exemplary embodiment, the waypoint determination device 100 may be disposed onboard a vehicle (e.g. a motor vehicle) and the current location information of the waypoint determination device 100 may be denoted graphically on the second process output 500 as a human operator location 502.

In the exemplary embodiment, the processing unit 102 may be further arranged to generate one or more second geometrical shapes based on the determined one or more waypoints and to determine one or more additional waypoints based on a plurality of second shape location information that is based on one or more outlines of the generated one or more second geometrical shapes.

As one example, based on the determined one or more waypoints e.g. 306, 308, 310 of FIG. 3, the processing unit 102 may generate one or more second geometrical shapes 504, 506, 508, 510, 512. In the exemplary embodiment, the second geometrical shapes are each substantially a circle.

In the exemplary embodiment, the processing unit 102 may be further arranged to generate additional one or more of the second geometrical shapes for substantially covering an area within the generated geometrical shape and for the additional one or more of the second geometrical shapes to overlap with the one or more second geometrical shapes. As one example, based on the determined waypoint e.g. 312 of FIG. 3, i.e. a waypoint determined and located in a space between the outline of the generated geometrical shape and the current location information of the waypoint determination device, in the second process output 500, the processing unit 102 may generate the additional one or more of the second geometrical shapes to include a second geometrical shape 514 that covers an area within the ellipse 204 (or a space between the outline of the ellipse 204 and the current location information of the waypoint determination device) and which overlaps with the circles 504, 506, 508, 510, 512. In the exemplary embodiment, the second geometrical shape 514 is in the form of a circle 514, being substantially identical in shape to the generated circles 504, 506, 508, 510, 512.

In the exemplary embodiment, the waypoint determination device is arranged to obtain second shape location information that is based on one or more outlines of the generated one or more second geometrical shapes. Thus, the waypoint determination device is arranged to obtain second shape location information based on the respective outlines of the generated circles 504, 506, 508, 510, 512, 514. Based on the second shape location information, the waypoint determination device is arranged to determine one or more further additional waypoints. In the exemplary embodiment, the second shape location information is obtained substantially similarly to how the shape location information of e.g. FIG. 2 is obtained. For example, co-ordinates along the combined outlines of the generated circles 504, 506, 508, 510, 512, 514 may be obtained. For example, one or more further additional waypoints may be obtained that are along/on the combined outlines of the generated circles 504, 506, 508, 510, 512, 514 and/or that are within a space between the combined outlines of the generated circles 504, 506, 508, 510, 512, 514 and the current location information of the waypoint determination device.

In the exemplary embodiment, by fitting second geometrical shapes based on determined one or more waypoints, and/or even within a space between the outline of the geometrical shape and the current location information of the waypoint determination device, the inventor has recognised that this may usefully minimise missing out on any potential waypoints around the geometrical shape generated in the heading angle of transit that may otherwise have been missed out.

In the exemplary embodiment, the size of the one or more of the second geometrical shapes and/or the size of the additional one or more of the second geometrical shapes may be adapted or modified such that the second geometrical shapes overlap one another. In the second process output 500, the circles 504, 506, 508, 510, 512, 514 may be adapted or modified such that diameters and therefore, the circumferences of the circles 504, 506, 508, 510, 512, 514 overlap one another adjacently. In this way, the inventor has recognised that as the circle of search around a determined waypoint is made big enough, then any POIs (or the one or more additional waypoints) that initially fall outside the circles may not be missed out, i.e. may also be determined.

In the exemplary embodiment, the second geometrical shapes are each substantially a circle. The inventors recognize that for most search algorithms, e.g. for weather or for a point of interest search, a search radius around a given coordinate is typically performed and thus, a circle confers such usage.

In another exemplary embodiment, the generated one or more second geometrical shapes of FIG. 5 may be arranged to be generated substantially similarly to the one or more geometrical shapes. For example, the one or more second geometrical shapes may vary in size based on a variance in the current speed of transit of the waypoint determination device. For example, the second shape location information may vary dynamically based on the sizes of the one or more second geometrical shapes.

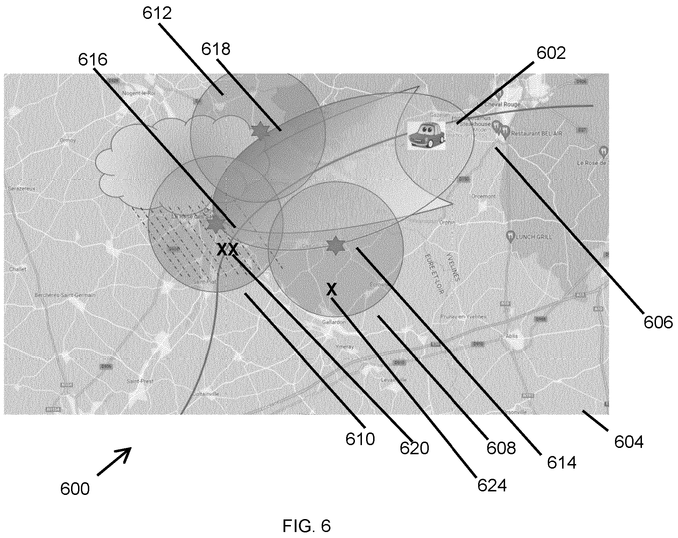

FIG. 6 is a schematic illustration of an implementation output of a waypoint determination device in another exemplary embodiment. In the exemplary embodiment, the implementation output 600 may be generated by a processing unit of a waypoint determination device that is substantially identical to the waypoint determination device 100 described with reference to FIG. 1 and using the process output 500 described with reference to FIG. 5. For ease of reference, like numerals are used for exemplary implementations of similar components of the waypoint determination device 100 as described in FIG. 1 and of similar elements of the process output 500 described with reference to FIG. 5. Further, in the exemplary embodiment, the waypoint determination device 100 may be disposed onboard a vehicle (e.g. a motor vehicle) and the current location information of the waypoint determination device 100 may be denoted graphically on the implementation output 600 as a vehicle 602.

In the exemplary embodiment, the implementation output 600 comprises a geographical map 604 and a generated first geometrical shape in the form of an ellipse 606 (compare ellipse 204 described with reference to FIGs. 2 and 5). The implementation output 600 further comprises one or more determined waypoints 614, 616, 618 that are each determined based on a plurality of shape location information based on the outline of the ellipse 606. Further, implementation output 600 further comprises a plurality of generated second geometrical shapes in the form of circles 608, 610, 612 (compare plurality of generated circles 504, 506, 508, 510, 512), the second geometrical shapes being generated based on the determined one or more waypoints 614, 616, 618 respectively. The implementation output 600 may additionally comprise one or more additional 620, 624 determined based on a plurality of second shape location information that is based on one or more outlines of the generated circles 608, 610, 612. In the exemplary embodiment, the processing unit 102 may display the implementation output 600 to an operator of the vehicle at a display unit 112 e.g. by displaying the implementation output 600 on the display unit 112.

In the exemplary embodiment, using the second geometrical shapes 608, 610, 612 and determining the one or more additional waypoints 620, 624, for example with reference to the additional waypoint 620, an extended determination ahead of the first geometrical shape 606 may be usefully performed. For example, in the exemplary embodiment, rainy weather may be happening at the area indicated at the circle 610 and an operator of the vehicle may be informed of the weather ahead of arrival at the additional waypoint 620 whereas at the other waypoints 614, 616, 618 and the additional waypoint 624, no adverse weather information may be reported. For example, in another exemplary embodiment, the one or more waypoints 614, 616, 618 may be obtained initially. Location information of such waypoints 614, 616, 618 may be transmitted to, or may be used to query, a weather prediction model to obtain possible weather alerts/information at location information as indicated by an additional waypoint e.g. 620, 624.

The described exemplary embodiments can thus provide a waypoint determination device that may use an elliptical shape/path for predictive navigation.

In the described exemplary embodiments, an operator in transit via a vehicle may query for/about POIs in the absence of a determined transit route, e.g. no trip is planned or indicated in a navigation system. Based on the transit heading angle, waypoints may be determined in order to identify the requested POIs. An estimate or prediction of the vehicle's heading may be obtained and dynamic virtual-type waypoints may be determined. In some exemplary embodiments, the waypoints may be determined using an elliptical formulation keeping e.g. the vehicle on one of the foci of the ellipse.

In the described exemplary embodiments, a technical solution may be provided akin to looking/determining ahead in an operator's journey based on e.g. a heading angle of the waypoint determination device. In some exemplary embodiments, a virtual or an imaginary ellipse is generated with the location information of the waypoint determination device at one of the foci of the ellipse. Possible waypoints are then determined/computed/calculated based the circumference of the ellipse in the direction of movement of the waypoint determination device. In the described exemplary embodiments, whenever an operator requests for any data ahead in its journey, the dynamic calculated waypoints can be used to search for requested data e.g. specific POIs. In some exemplary embodiments, the length of the major axis of the ellipse can also be corelated with a speed of transit of the waypoint determination device. Thus, the size of the ellipse could become larger if the waypoint determination device is moving at higher speeds and become smaller when the waypoint determination device is moving/cruising at lower speeds.

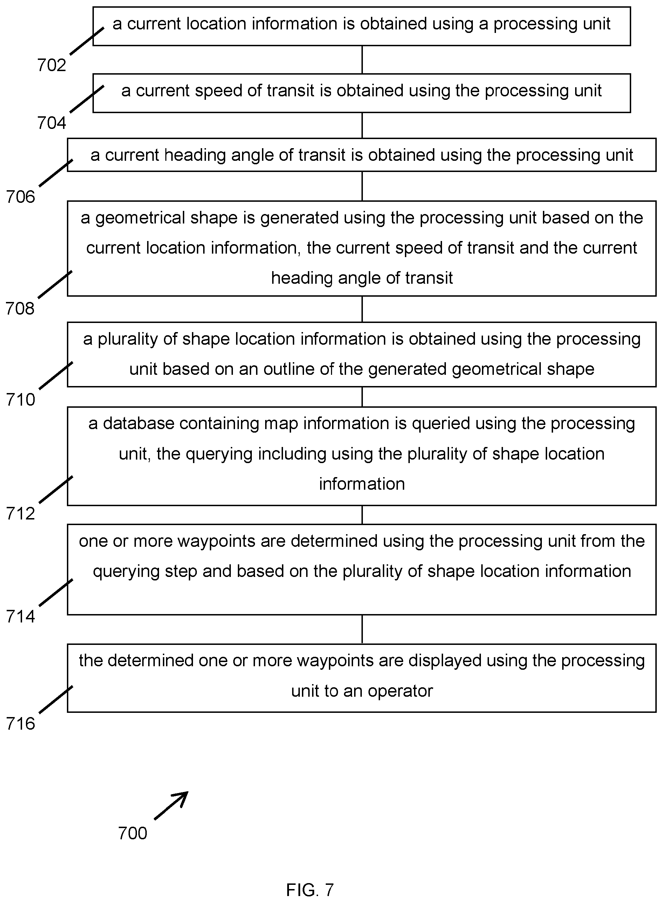

FIG. 7 is a schematic flowchart illustrating a computer-implemented method of determining waypoint information in an exemplary embodiment. One or more steps of the method 700 are computer-implemented. Alternatively, the method 700 is a computer-implemented method.

At step 702, a current location information is obtained using a processing unit. At step 704, a current speed of transit is obtained using the processing unit. At step 706, a current heading angle of transit is obtained using the processing unit. At step 708, a geometrical shape is generated using the processing unit based on the current location information, the current speed of transit and the current heading angle of transit. At step 710, a plurality of shape location information is obtained using the processing unit based on an outline of the generated geometrical shape. At step 712, a database containing map information is queried using the processing unit, the querying including using the plurality of shape location information. At step 714, one or more waypoints are determined using the processing unit from the querying step and based on the plurality of shape location information. At step 716, the determined one or more waypoints are displayed using the processing unit to an operator.

In the exemplary embodiment, the geometrical shape may substantially be an ellipse.

In the exemplary embodiment, the computer-implemented method may further comprise varying the geometrical shape in size based on a variance in the current speed of transit.

In the exemplary embodiment, the step of generating a geometrical shape may further comprise generating the geometrical shape with the outline of the generated geometrical shape spaced apart from the current location information.

In the exemplary embodiment, the step of determining one or more waypoints may further comprise determining the one or more waypoints that is each situated along the outline of the generated geometrical shape, within a space between the outline of the generated geometrical shape and the current location information or both.

In the exemplary embodiment, the computer-implemented method may further comprise generating one or more second geometrical shapes based on the determined one or more waypoints; and determining one or more additional waypoints based on a plurality of second shape location information that is based on one or more outlines of the generated one or more second geometrical shapes.

In the exemplary embodiment, the step of querying a database containing map information may comprise accessing the internet to access the database.

In the described exemplary embodiments, the waypoint determination device may provide information dynamic in nature e.g. by using the current location information of the waypoint determination device for determining waypoint information, by using the current speed of transit of the waypoint determination device and/or using the current heading angle of transit of the waypoint determination device. For example, based on a varying speed of transit, the generated geometric shape generated by the waypoint determination device may vary in size dynamically and the shape location information obtained based on an outline of the generated geometrical shape may vary, in turn leading to different one or more waypoints being determined dynamically and e.g. displayed to an operator.

In the described exemplary embodiments, the waypoint determination device may be useful if there is no indicated transit route in a navigation system.

In some exemplary embodiments, the waypoint determination device may calculate a set of more than one coordinates, e.g. more than one set of longitude and latitude points, along a circumference of an imaginary geometrical shape (e.g. an ellipse) which may be generated to fall ahead of the waypoint determination device's transit (e.g. effectively a current location information of the waypoint determination device and/or where an operator of the waypoint determination device is) since the waypoint determination device is located on e.g. one of the foci for generation of the geometrical shape.

In the description herein, the terms "coupled" or "connected" as used are intended to cover both directly connected or connected through one or more intermediate means, unless otherwise stated.

The use of "a", "an" or "the" is intended to mean "one or more" unless it is described specifically to the contrary.

The terms "configured to (perform a task/action)", "configured for (performing a task/action)" and the like as used in this description include being programmable, programmed, connectable, wired or otherwise constructed to have the ability to perform the task/action when arranged or installed as described herein. The terms "configured to (perform a task/action)", "configured for (performing a task/action)" and the like are intended to cover "when in use, the task/action is performed", e.g. specifically to and/or specifically configured to and/or specifically arranged to and/or specifically adapted to do or perform a task/action.

The term "and/or", e.g., "X and/or Y" is understood to mean either "X and Y" or "X or Y" and should be taken to provide explicit support for both meanings or for either meaning. The use of "or" is intended to mean an "inclusive or," and not an "exclusive or" unless it is described specifically to the contrary.

The terms "associated with", "related to" and the like used herein when referring to two elements refers to a broad relationship between the two elements. The relationship includes, but is not limited to, a physical, a chemical or a biological relationship. For example, when element A is associated with element B, elements A and B may be directly or indirectly attached to each other or element A may contain element B or vice versa.

The terms "exemplary embodiment", "example embodiment", "exemplary implementation", "exemplarily" and the like used herein are intended to indicate an example of matters described in the present disclosure. Such an example may relate to one or more features defined in the claims and is not necessarily intended to emphasise a best example or any essentialness of any features.

The description herein may be, in certain portions, explicitly or implicitly described as algorithms and/or functional operations that operate on data within a computer memory or an electronic circuit. These algorithmic descriptions and/or functional operations are usually used by those skilled in the information/data processing arts for efficient description. An algorithm is generally relating to a self-consistent sequence of steps leading to a desired result. The algorithmic steps can include physical manipulations of physical quantities, such as electrical, magnetic or optical signals capable of being stored, transmitted, transferred, combined, compared, and otherwise manipulated.

Further, unless specifically stated otherwise, and would ordinarily be apparent from the following, a person skilled in the art will appreciate that throughout the present specification, discussions utilizing terms such as "scanning", "calculating", "determining", "replacing", "generating", "initializing", "outputting", and the like, refer to action and processes of an instructing processor/computer system, or similar electronic circuit/device/component, that manipulates/processes and transforms data represented as physical quantities within the described system into other data similarly represented as physical quantities within the system or other information storage, transmission or display devices etc.

The description also discloses relevant device/apparatus for performing the steps of the described methods. Such apparatus may be specifically constructed for the purposes of the methods, or may comprise a general purpose computer/processor or other device selectively activated or reconfigured by a computer program stored in a storage member. The algorithms and displays described herein are not inherently related to any particular computer or other apparatus. It is understood that general purpose devices/machines may be used in accordance with the teachings herein. Alternatively, the construction of a specialized device/apparatus to perform the method steps may be desired.

In addition, it is submitted that the description also implicitly covers a computer program, in that it would be clear that the steps of the methods described herein may be put into effect by computer code. It will be appreciated that a large variety of programming languages and coding can be used to implement the teachings of the description herein. Moreover, the computer program if applicable is not limited to any particular control flow and can use different control flows without departing from the scope of the invention.

Furthermore, one or more of the steps of the computer program if applicable may be performed in parallel and/or sequentially. Such a computer program if applicable may be stored on any computer readable medium. The computer readable medium may include storage devices such as magnetic or optical disks, memory chips, or other storage devices suitable for interfacing with a suitable reader/general purpose computer. In such instances, the computer readable storage medium is non-transitory. Such storage medium also covers all computer-readable media e.g. medium that stores data only for short periods of time and/or only in the presence of power, such as register memory, processor cache and Random Access Memory (RAM) and the like. The computer readable medium may even include a wired medium such as exemplified in the Internet system, or wireless medium such as exemplified in Bluetooth technology. The computer readable medium may be, for example, cloud storage in the Internet or within an intranet. The computer program when loaded and executed on a suitable reader effectively results in an apparatus that can implement the steps of the described methods, e.g. in a physical embodiment. The computer readable medium is intended to be transferable and is reproducible in that the computer program if applicable is reproducible..

The exemplary embodiments may also be implemented as hardware modules. A module is a functional hardware unit designed for use with other components or modules. For example, a module may be implemented using digital or discrete electronic components, or it can form a portion of an entire electronic circuit such as an Application Specific Integrated Circuit (ASIC). A person skilled in the art will understand that the exemplary embodiments can also be implemented as a combination of hardware and software modules.

Additionally, when describing some embodiments, the disclosure may have disclosed a method and/or process as a particular sequence of steps. However, unless otherwise required, it will be appreciated that the method or process should not be limited to the particular sequence of steps disclosed. Other sequences of steps may be possible. The particular order of the steps disclosed herein should not be construed as undue limitations. Unless otherwise required, a method and/or process disclosed herein should not be limited to the steps being carried out in the order written. The sequence of steps may be varied and still remain within the scope of the disclosure.

Further, in the description herein, the word "substantially" whenever used is understood to include, but not restricted to, "entirely" or "completely" and the like. In addition, terms such as "comprising", "comprise", and the like whenever used, are intended to be non-restricting descriptive language in that they broadly include elements/components recited after such terms, in addition to other components not explicitly recited. For an example, when "comprising" is used, reference to a "one" feature is also intended to be a reference to "at least one" of that feature. Terms such as "consisting", "consist", and the like, may, in the appropriate context, be considered as a subset of terms such as "comprising", "comprise", and the like. Therefore, in embodiments disclosed herein using the terms such as "comprising", "comprise", and the like, it will be appreciated that these embodiments provide teaching for corresponding embodiments using terms such as "consisting", "consist", and the like. Further, terms such as "about", "approximately" and the like whenever used, typically means a reasonable variation, for example a variation of +/- 5% of the disclosed value, or a variance of 4% of the disclosed value, or a variance of 3% of the disclosed value, a variance of 2% of the disclosed value or a variance of 1% of the disclosed value.

Furthermore, in the description herein, certain values may be disclosed in a range. The values showing the end points of a range are intended to illustrate a preferred range. Whenever a range has been described, it is intended that the range covers and teaches all possible sub-ranges as well as individual numerical values within that range. That is, the end points of a range should not be interpreted as inflexible limitations. For example, a description of a range of 1% to 5% is intended to have specifically disclosed sub-ranges 1% to 2%, 1% to 3%, 1% to 4%, 2% to 3% etc., as well as individually, values within that range such as 1%, 2%, 3%, 4% and 5%. It is to be appreciated that the individual numerical values within the range also include integers, fractions and decimals. Furthermore, whenever a range has been described, it is also intended that the range covers and teaches values of up to 2 additional decimal places or significant figures (where appropriate) from the shown numerical end points. For example, a description of a range of 1% to 5% is intended to have specifically disclosed the ranges 1.00% to 5.00% and also 1.0% to 5.0% and all their intermediate values (such as 1.01%, 1.02% ... 4.98%, 4.99%, 5.00% and 1.1%, 1.2% ... 4.8%, 4.9%, 5.0% etc.,) spanning the ranges. The intention of the above specific disclosure is applicable to any depth/breadth of a range.

In the description herein, a geometrical shape substantially in the form of an ellipse and a second geometrical shape substantially in the form of a circle have been described in the exemplary embodiments. It will be appreciated that such geometrical shapes are not limited to the specific shapes described herein and may include other forms of such geometrical shapes. That is, references made to a geometrical shape are understood to broadly be an ellipse but may also be modified to be of any other geometrical shape, and references made to a second geometrical shape are understood to broadly be a circle but may also be modified to be of any other geometrical shape.

In exemplary embodiments, accompanying data may also be provided for one or more of the determined waypoints determined by the processing unit. For example, data relating to POIs in the vicinity of a determined waypoint may be provided for display to the operator. Such POIs may be general POIs, e.g. recorded POIs in the vicinity of a determined waypoint, or specific POIs, e.g. recorded POIs in relation to an operator's request/query in the vicinity of a determined waypoint. For example, additional data relating to the vicinity of a determined waypoint may be provided to the operator. As one example, weather forecast information relating to the vicinity of a determined waypoint may be provided to the operator.

In some exemplary embodiments, a waypoint determination device may be activated and/or a computer-implemented method of determining waypoint information may be triggered to be performed by an operator input. For example, an operator may provide an audio input such as a voice command/query. For example, an operator may provide other forms of inputs such as a text input via a graphical user interface on the display unit. In some other exemplary embodiments, an operator input may not be needed. For example, a waypoint determination device may be activated and/or a computer-implemented method of determining waypoint information may be triggered to be performed by an event. For example, an event may be a start of a vehicle motor engine. For example, an event may be a predetermined distance and/or a predetermined time after a start of a vehicle motor engine. For example, an event may be based on a geolocation or location information of the waypoint determination device. For example, an event may be a predetermined distance and/or a predetermined time after a previous query of a database containing map information for the determination of one or more waypoints.

In exemplary embodiments, a size of a geometrical shape and/or a generated second geometrical shape may be determined dynamically in different ways. For one example, for an ellipse, a major axis of the ellipse may vary in length, e.g. after a predetermined distance and/or a predetermined time after the ellipse has been generated. For this example, the ellipse may be initially generated based on a current speed of transit of the waypoint determination device and e.g. after a predetermined distance and/or a predetermined time after the ellipse has been generated, the ellipse is varied in size by a variance of its major axis based on a second current speed of transit of the waypoint determination device e.g. after a predetermined distance and/or a predetermined time after the ellipse has been generated. For another example, for an ellipse, a major axis of the ellipse may vary in length, e.g. depending on a current speed of transit of the waypoint determination device for a current query. For this example, the ellipse may be initially generated based on a current speed of transit of the waypoint determination device for a first query of a database containing map information for the determination of one or more waypoints from the first query and thereafter, the ellipse is varied in size by a variance of its major axis based on a second current speed of transit of the waypoint determination device for a second query of a database containing map information for the determination of one or more waypoints from the second query. Thus, the size of the ellipse may vary dynamically based on the respective current speeds of transit e.g. across the different queries of the database containing map information.

It will be appreciated by a person skilled in the art that other variations and/or modifications may be made to the specific embodiments without departing from the scope of the claimed invention as broadly described. For example, in the description herein, features of different exemplary embodiments may be mixed, combined, interchanged, incorporated, adopted, modified, included etc. or the like across different exemplary embodiments. For example, exemplary embodiments are not necessarily mutually exclusive as some may be combined with one or more embodiments to form new exemplary embodiments. Furthermore, it will be appreciated that while the present disclosure provides embodiments having one or more of the features/characteristics discussed herein, one or more of these features/characteristics may also be disclaimed in other alternative embodiments and the present disclosure provides support for such disclaimers and these associated alternative embodiments. The present embodiments are, therefore, to be considered in all respects to be illustrative and not restrictive.

### REFERENCE SIGNS LIST

100 waypoint determination device
102 processing unit
104 current location information
106 current speed of transit
108 current heading angle of transit
110 database
112 display unit
200 process output
202 operator location
204 geometrical shape
206 co-ordinates
208 co-ordinates
210 heading co-ordinates
212 co-ordinates
214 co-ordinates
216 major axis of ellipse 204
300 implementation output
302 vehicle
304 geographical map
306 possible waypoint
308 possible waypoint
310 possible waypoint
312 possible waypoint
314 generated ellipse
400 implementation output
402 moving object
404 geographical map
406 possible waypoint
408 possible waypoint
410 possible waypoint
412 generated ellipse
500 second process output
502 operator location
504 generated second geometrical shape
506 generated second geometrical shape
508 generated second geometrical shape
510 generated second geometrical shape
512 generated second geometrical shape
514 generated second geometrical shape
600 implementation output
602 vehicle
604 geographical map
606 generated ellipse
608 generated circle
610 generated circle
612 generated circle
614 possible waypoint
616 possible waypoint
618 possible waypoint
620 possible additional waypoint
624 possible additional waypoint
700 flowchart illustrating a computer-implemented method of determining waypoint information
702 step including obtaining a current location information using a processing unit
704 step including obtaining a current speed of transit using the processing unit
706 step including obtaining a current heading angle of transit using the processing unit
708 step including generating a geometrical shape using the processing unit based on the current location information, the current speed of transit and the current heading angle of transit
710 step including obtaining a plurality of shape location information using the processing unit based on an outline of the generated geometrical shape
712 step including querying a database containing map information using the processing unit, the querying including using the plurality of shape location information
714 step including determining one or more waypoints using the processing unit from the querying step and based on the plurality of shape location information. 716 step including displaying the determined one or more waypoints using the processing unit to an operator

## Claims

1. A waypoint determination device (100) for use with a vehicle, the device comprising
a processing unit (102) arranged to obtain a current location information (104) of the waypoint determination device, the processing unit further arranged to obtain a current speed of transit (106) of the waypoint determination device;
the device **characterized in that**
the processing unit is further arranged to obtain a current heading angle of transit (108) of the waypoint determination device and the processing unit is further arranged to generate a geometrical shape (204) based on the current location information, the current speed of transit and the current heading angle of transit of the waypoint determination device;
wherein the processing unit is arranged to obtain a plurality of shape location information based on an outline of the generated geometrical shape (206);
wherein the processing unit is further arranged to query a database containing map information (110), the query including usage of the plurality of shape location information;
wherein the processing unit is further arranged to determine one or more waypoints (306, 308, 310, 312) from the query and based on the plurality of shape location information; and
wherein the processing unit is further arranged to display the determined one or more waypoints to an operator at a display unit (112) coupled to the processing unit

2. The device as claimed in claim 1, wherein the geometrical shape is substantially an ellipse.

3. The device as claimed in claims 1 or 2, wherein the processing unit is further arranged to vary the geometrical shape in size based on a variance in the current speed of transit of the waypoint determination device.

4. The device as claimed in any one of claims 1 to 3, wherein the processing unit is further arranged to generate the geometrical shape with the outline of the generated geometrical shape spaced apart from the current location information of the waypoint determination device.

5. The device as claimed in any one of claims 1 to 4, wherein the processing unit is further arranged to determine the one or more waypoints that is each situated along the outline of the generated geometrical shape (306, 308, 310), within a space between the outline of the generated geometrical shape and the current location information of the waypoint determination device (312) or both (306, 308, 310, 312).

6. The device as claimed in any one of claims 1 to 5, wherein the processing unit is further arranged to generate one or more second geometrical shapes (608, 610, 612) based on the determined one or more waypoints and to determine one or more additional waypoints (620, 624) based on a plurality of second shape location information that is based on one or more outlines of the generated one or more second geometrical shapes.

7. The device as claimed in any one of claims 1 to 6, wherein the database containing map information is provided accessible on the internet.

8. A computer implemented method of determining waypoint information, the computer implemented method comprising
obtaining a current location information using a processing unit (702);
obtaining a current speed of transit using the processing unit (704);
the method **characterized in that** the method further comprises
obtaining a current heading angle of transit using the processing unit (706);
generating, using the processing unit, a geometrical shape based on the current location information, the current speed of transit and the current heading angle of transit (708);
obtaining, using the processing unit, a plurality of shape location information based on an outline of the generated geometrical shape (710);
querying a database containing map information using the processing unit, the querying including using the plurality of shape location information (712);
determining, using the processing unit, one or more waypoints from the querying step and based on the plurality of shape location information (714); and
displaying the determined one or more waypoints using the processing unit to an operator (716).

9. The computer-implemented method as claimed in claim 8, wherein the geometrical shape is substantially an ellipse.

10. The computer-implemented method as claimed in claims 8 or 9, further comprising varying the geometrical shape in size based on a variance in the current speed of transit.

11. The computer-implemented method as claimed in any one of claims 8 to 10, wherein the step of generating a geometrical shape further comprises generating the geometrical shape with the outline of the generated geometrical shape spaced apart from the current location information.

12. The computer-implemented method as claimed in any one of claims 8 to 11, wherein the step of determining one or more waypoints further comprises determining the one or more waypoints that is each situated along the outline of the generated geometrical shape, within a space between the outline of the generated geometrical shape and the current location information or both.

13. The computer-implemented method as claimed in any one of claims 8 to 12, further comprising
generating one or more second geometrical shapes based on the determined one or more waypoints; and
determining one or more additional waypoints based on a plurality of second shape location information that is based on one or more outlines of the generated one or more second geometrical shapes.

14. The computer-implemented method as claimed in any one of claims 8 to 13, wherein the step of querying a database containing map information comprises accessing the internet to access the database.
